# EUROPÄISCHE PATENTSCHRIFT

(11) **EP 1 595 678 B1**
(45) Veröffentlichungstag und Bekanntmachung des Hinweises auf die Patenterteilung: **28.05.2008**
(21) Anmeldenummer: 05450085.5
(22) Anmeldetag: 12.05.2005
(51) Int. Cl.: B29C 45/27

(54) **Spritzgussform**
Injection mold
Moule d'injection

(30) Priorität: 12.05.2004 AT 35004 U
(43) Veröffentlichungstag der Anmeldung: 16.11.2005
(73) Patentinhaber: Rico Elastomere Projecting GmbH, 4600 Thalheim/Wels (AT)
(72) Erfinder: Griesbaum, Alfred, 4600 Thalheim/Wels (AT)
(74) Vertreter: Haffner, Thomas M.

(56) Entgegenhaltungen:
- EP-A- 0 583 601
- EP-A- 0 710 535
- DE-A1- 19 857 735

## Beschreibung

Die Erfindung betrifft eine Spritzgußform für warmverfestigende oder vulkanisierbare elastomere Materialien mit einer Mehrzahl von Formnestern und gekühlten Einspritzdüsen, welche in mit Formnestern in offener Verbindung stehenden Vorkammern münden.

Spritzgußformen der eingangs genannten Art sind beispielsweise der AT 401 253 B zu entnehmen.

Bei vorbekannten Ausbildungen derartiger Spritzgußformen werden warmverfestigende oder vulkanisierende Materialien, wie beispielsweise Flüssigsilikone oder Kautschuk, einem Formnest über Zuführkanäle zugeführt, wobei beispielsweise Zuführkanäle von mehreren Formnestern zu einer Verteilerspinne zusammengefasst sind. Bei diesen Ausbildungen haben sowohl die Zuführkanäle als auch die Verteilerspinnen die Formtemperatur, sodass die Spritzgußteile nach dem Guß von den Enden der Angußstangen bzw. Verteilerspinnen abgetrennt werden müssen. Dies führt zur Schädigungen der Oberfläche bzw. zur Gratbildung und gleichzeitig zu einem Verbrauch großer Mengen an nicht wieder verwendbarem Material. In der AT 401 253 B wurde zur Verringerung des Materialverbrauchs und zur Verbesserung der Oberflächengestaltung eine besonders einfache und robuste Ausbildung von Düsenkörpern bzw. Einspritzdüsen vorgeschlagen, bei welcher auf empfindliche und überaus dünnwandige Kanülen verzichtet werden kann und gleichzeitig der Materialverbrauch reduziert werden kann. Wesentlich bei dieser Ausbildung war es, dass mit konventionellen Einspritzdüsen gearbeitet werden konnte, welche im Abstand vom Formnest in eine Vorkammer münden, wobei die Vorkammer die Funktion der Wärmeisolation übernahm und eine entsprechende Verringerung der Wärmeübertragung von der Formplatte auf das in der Einspritzdüse enthaltene Material erzielt werden kann. Bei der vorbekannten Ausbildung wurde auch bereits vorgeschlagen in eine Formplatte der Spritzgußform eine Verschleißhülse einzusetzen und die Einspritzdüse in die Verschleißhülse mündend anzuordnen. Insgesamt wurde eine hohe thermische Formkonstanz und eine exakte Positionierung bei gleichzeitig hoher Ausbeute gewährleistet.

Um nun die Leistung derartiger Einrichtungen zu erhöhen, war es prinzipiell denkbar entsprechend größere Formen vorzusehen, mit welchen über eine entsprechend größere Anzahl von Düsen auch gleichzeitig eine größere Anzahl von Formnestern gespeist werden können. Nachteilig bei einer derartigen Vergrößerung der Baumaße ist allerdings der Umstand, dass thermische Spannungen in derartig größeren Bauteilen zu unexakten Positionierungen und Undichtheiten führen können, welche vor allem bei entsprechend großen Werkzeugen zusätzlich auch noch mit einer Erhöhung der zykluszeit einhergehen, da die bewegten Massen erhöht werden. Eine entsprechende Vergrößerung der erforderlichen Maschinen hat somit eine Reihe von Nachteilen, da insbesondere neben höheren Zykluszeiten und höheren Investitionen der theoretisch erzielbare Vorteil der gleichzeitigen Fertigung einer größeren Anzahl von Spritzteilen keineswegs linear mit der Vergrößerung der Bauteile einhergeht.

Ein relativ großer Teil der mit derartigen Maschinen herzustellenden Spritzteile zeichnet sich durch relativ kleine Abmessungen aus. Für die Herstellung von Kabeldichtungen würde beispielsweise der Übergang von 128 Kaltkanaldüsen auf 256 Kaltkanaldüsen mit direkter Anspritzung mit erheblich größerem Wartungsaufwand verbunden sein, wenn von den wesentlich höheren Investitionen, der erhöhten bewegten Masse, welche auch eine Zykluszeitverlängerung zur Folge hat, und damit erhöhten Betriebskosten abgesehen wird.

Im Zusammenhang mit Warmkanalsystemen sind bereits Mehrfach-Düsenköpfe bekannt geworden, wie dies beispielsweise aus der EP 583 601 A1 ersichtlich ist. Ein anderes Heißkanalsystem ist aus der DE 198 57 735 A1 bekannt geworden, bei welchem eine Heißkanaldüse mit einem Nadelelement, das eine Mehrzahl von Verschlussnadeln aufweist, die sich parallel durch eine gemeinsame Kompressionsnadel hindurch erstrecken. Die Heißkanaldüse weist hierbei einen Kompressionsraum auf.

Die Erfindung zielt nun darauf ab, eine Spritzgußform der eingangs genannten Art zu schaffen, mit welcher die Vorteile offener Kaltkanaldüsen und geringere Zykluszeiten sowie geringer bewegter Massen bei gleichzeitiger Erhöhung der Anzahl der zu befüllenden Formnester in einfacher Weise realisiert werden können.

Zur Lösung dieser Aufgabe besteht die erfindungsgemäße Spritzgußform im Wesentlichen darin, dass die Einspritzdüsen als Mehrfachdüsen ausgebildet sind und über eine Mehrzahl von Düsenkanälen und Düsenmündungen in eine gemeinsame Vorkammer münden und dass eine Mehrzahl von Formnestern über jeweils wenigstens einen Kanal mit der Vorkammer in offener Verbindung steht. Die Maßnahme, die Einspritzdüsen als Mehrfachdüsen auszubilden, bedeutet nun in aller Regel, dass die Düsenmündungen außeraxiale und unter einem spitzen Winkel mit der Düsenachse am Düsenkopf angeordnet werden, wobei durch eine derartige Schrägstellung geometrisch überaus dicht gepackte Formnester auch seitlich direkt angespritzt werden können, ohne dass dies einen zusätzlichen Abfall mit sich bringt. Insbesondere bei Teilen, deren Sichtflächen keine Anspritzpunkte zeigen sollen, kann mit einer derartigen Schrägstellung der Düsenmündungen unmittelbar ein weiterer Vorteil erzielt werden, wobei die Düsen selbst axial und im Wesentlichen normal zu den Trennungsebenen der Formnester eingesetzt werden können. Dies führt zu einem wesentlich geringeren Justierungsaufwand und zu einem leichteren Zusammenbauen. Dadurch, dass diese Mehrzahl von Düsenkanälen und Düsenmündungen in eine gemeinsame Vorkammer mündet, wird die gewünschte thermische Isolation für eine Mehrzahl von Formnestern gleichzeitig gewährleistet, wobei diese Mehrzahl von Formnestern jeweils über wenigstens einen Kanal mit der Vorkammer in offener Verbindung steht. Insgesamt ergeben sich auf diese Weise alle Vorteile von offenen Kaltkanaldüsen, wobei ein seitliches Anspritzen mit derartigen Mehrfachdüsen bei axialer Ausrichtung und damit ohne Schrägstellung der Düsengrundkörper möglich ist. Die Kavitätenplatte bleibt unverändert von vorne abnehmbar, was bei schräg orientierten Einspritzdüsen nicht ohne weiteres möglich wäre. Die Erhöhung der Anzahl von Kavitäten in unmittelbarer Umgebung einer einzigen Düse, deren Baumaße den bisher verwendeten Einzeldüsen im Wesentlichen entsprechen, führt hiebei zu überaus kompakten Abmessungen und damit zu kleiner bauenden Maschinen, wobei gleichzeitig wiederum die Vorteile kürzerer Zykluszeiten und auf Grund des geringeren Gewichtes auch verringerten Wartungsaufwandes erzielt werden.

In besonders vorteilhafter Weise ist die erfindungsgemäße Ausbildung so getroffen, dass die Kanäle zwischen Vorkammer und Formnestern jeweils im Bereich der Mündung eines Düsenkanals der Einspritzdüsen angeordnet ist. Auf diese Weise gelangt das über die Düsenkanäle ausgestoßene Material in strömungstechnisch günstiger Weise unmittelbar in die Formnester. Wie bereits eingangs erwähnt, lässt sich eine dichte Packung von Formnestern in unmittelbarer Umgebung einer Einspritzdüse mit einem Mehrfachdüsenkopf in besonders einfacher Weise dadurch verwirklichen, dass die Düsenkanäle der Einspritzdüsen mit dem axialen Zuführungskanal der Einspritzdüsen jeweils spitze Winkel einschließen, womit gleichzeitig die Vorteile eines seitlichen Anspritzpunktes und damit fehlerfreier Sichtflächen gewährleistet werden können.

Gemäß einer bevorzugten Weiterbildung der erfindungsgemäßen Spritzgußform ist die Ausbildung so getroffen, dass die Einspritzdüse im Bereich des Mehrfachdüsenkopfes in axialer Richtung zur Düsenspitze in einem mittleren, axialen Bereich kürzer ausgebildet ist als im Bereich der auf einem Kreis mit dem Mittelpunkt in der Düsenachse liegenden Düsenmündungen. Eine derartige Ausbildung des Düsenkopfes führt zu einer besonders vorteilhaften Geometrie der Vorkammer und damit zu einer weiteren Verringerung des jeweils maximal entstehenden Abfalls bei gleichzeitig optimaler thermischer Isolierung des Materials in den Düsenkanälen gegenüber der Form. Prinzipiell können mit einer Kaltkanaldüse zwei oder mehrere Artikel abfallfrei angespritzt werden, wobei dies bedeutet, dass eine mehrfach reduzierte Anzahl von Kaltkanaldüsen eingesetzt werden kann. Im Werkzeug selbst tritt ein entsprechend reduzierter Wärmeverlust auf, wobei die entsprechend reduzierte Anzahl von Kaltkanaldüsen insgesamt einen wesentlich geringeren Wartungsaufwand zur Folge hat.

Mit Vorteil ist die Ausbildung hiebei so getroffen, dass die Vorkammer im Axialschnitt der Kontur des Düsenkopfes entsprechend ausgebildet ist, wobei vorzugsweise der den Formnestern benachbarte Grund der Vorkammer als Ringkanal ausgebildet ist, in welchen die über den axialen Bereich des Düsenkopfes vorragenden Düsenmündungen eintauchen. Eine derartige Ausbildung verringert den Justierungsaufwand erheblich.

Insgesamt ergibt sich durch geringe Nestabstände eine besonders kompakte Bauweise, wobei gleichzeitig wesentlich geringere Probleme mit der Wärmeausdehnung der Formhälften und damit einhergehend geringere Zentrierprobleme durch Formversatz auftreten. Unmittelbare Folge ist ein geringerer Verschleiß der Führungselemente. Der Vorteil der erfindungsgemäßen Ausbildung ist insbesondere bei kleineren Teilen, wie beispielsweise Kabeldichtungen mit Durchmessern von beispielsweise 3 bis 4 mm, besonders deutlich, da hier überaus kleine Kavitätsabstände ermöglicht werden.

Die Mehrfachkaltkanaldüsen erlauben es beispielsweise durch einfache Modifikation des Düsenkopfes und einer Formhälfte bei im Wesentlichen gleicher Baugröße mit 128 Kaltkanaldüsen ein entsprechendes Vielfaches an Spritzgußteilen herzustellen, ohne dass dies eine Erhöhung des Wartungsaufwandes zur Folge hat. Die gleichzeitig bei besonders kompakter Ausbildung sich ergebende Orientierung der Einspritzkanäle spitzwinkelig zur Achse der Einspritzdüse ermöglicht auch komplexe Bauteil mit schwieriger Einformung in einfacher Weise zu spritzen, wobei auch mit konventionellen Kaltkanaldüsen nur schwer zugängliche Anspritzstellen realisiert werden können.

Die Erfindung wird nachfolgend von in der Zeichnung schematisch dargestellten Ausführungsbeispielen näher erläutert.

In dieser zeigen Fig.1 eine erste Ausbildung einer erfindungsgemäßen Spritzgußform, Fig.2 eine abgewandelte Ausbildung mit zusätzlicher Verschleißhülse, Fig.3 eine teilweise geschnittene Ausbildung einer Düse mit einem Düsenkörper, Fig. 4 und 5 eine Düse mit zwei Düsenkanälen und Fig.6 und 7 eine analoge Düse mit vier Düsenkanälen schematisch in einer perspektivischen Ansicht.

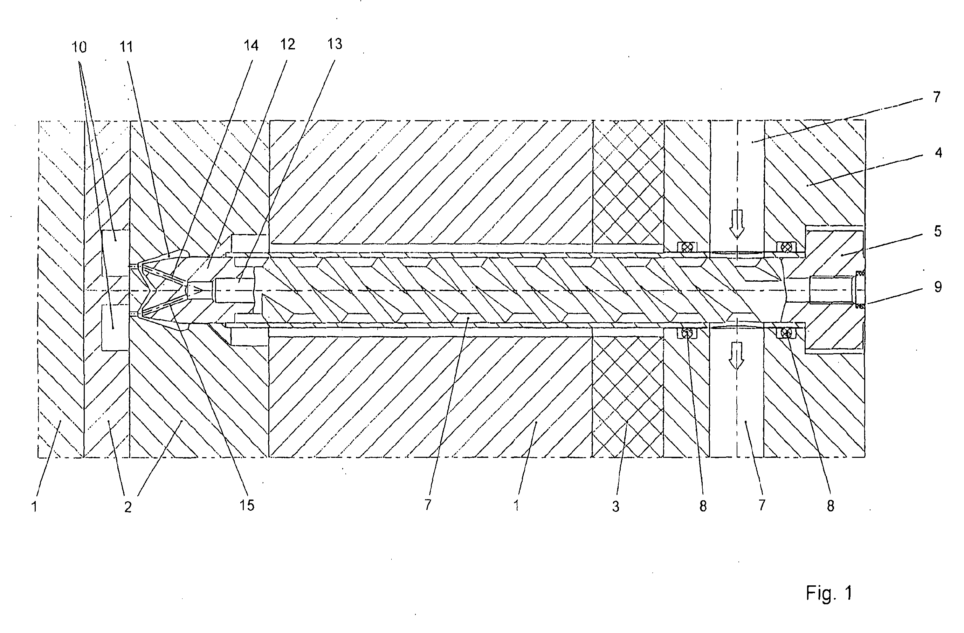

In Fig.1 ist mit 1 eine Heizplatte bezeichnet, welche im Betrieb üblicher Weise auf Temperaturen von etwa 200°C gehalten ist. An die Heizplatte anschließend sind Formplatten 2 vorgesehen. Auch diese Formplatten befinden sich auf Temperaturen von etwa 200°C im Betrieb. Zur Isolation ist in der Folge eine Temperaturschutzplatte 3 angeordnet, an welche die Düsenhalteplatte 4 angeschlossen ist. Die Düsenhalteplatte 4 befindet sich auf Kühltemperatur und damit auf einer Temperatur von ungefähr 20°C. In die Düsenhalteplatte 4 ist eine Kaltkanaldüse 5 eingesetzt. Am Umfang der Kaltkanaldüse sind Kühlkanäle 7 ersichtlich. Die Dichtung der Kaltkanaldüse relativ zur Düsenhalteplatte 4 wird durch O-Ringdichtungen 8 gewährleistet. Eine weitere Dichtung 9 dient dem dichten Anschluß der Zuführungsleitung

Die Kaltkanaldüse mündet in Abstand vom Formnest 10 in eine Vorkammer 11 der Formplatte 2, welche von zur Kaltkanaldüse 5 im Wesentlichen konzentrisch und entsprechend der Düsenspitze konisch geneigten Wänden begrenzt ist. Der lichte Querschnitt dieser Vorkammer 11 verjüngt sich zum Austrittsende der Vorkammer, welches dem Formnest 10 benachbart ist.

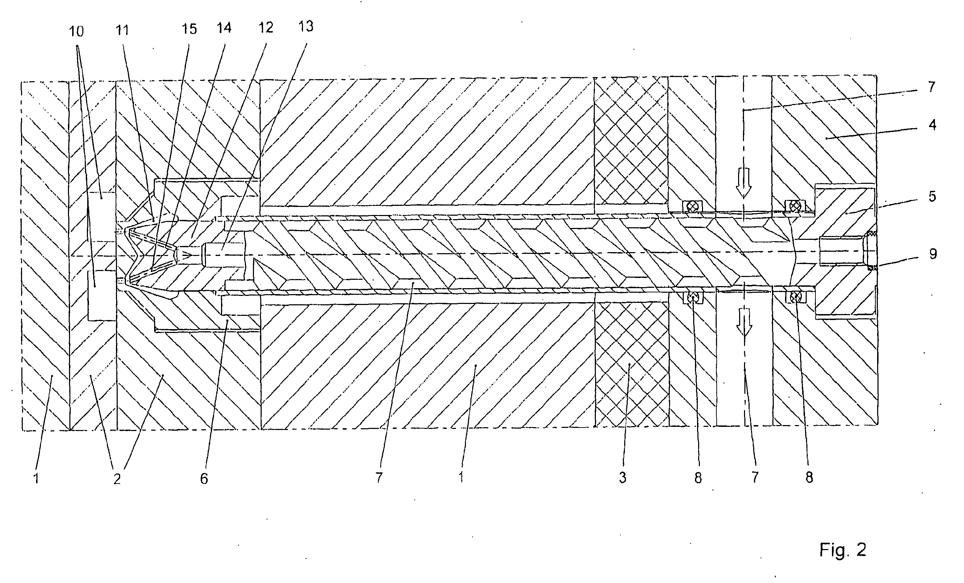

Bei der Ausbildung nach Fig.2 ist zusätzlich eine Verschleißhülse 6 ersichtlich, welche in einfacher Weise zur Anpassung an verschiedene Erfordernisse getauscht werden kann. Insbesondere lässt sich durch einen Tausch der Verschleißhülse 6 die geometrische Gestalt der Vorkammer 11 den gewünschten Erfordernissen anpassen und es lässt sich sicherstellen, dass hier tatsächlich die gewünschte Isolation durch das in der Vorkammer 11 enthaltene elastomere Material gewährleistet wird.

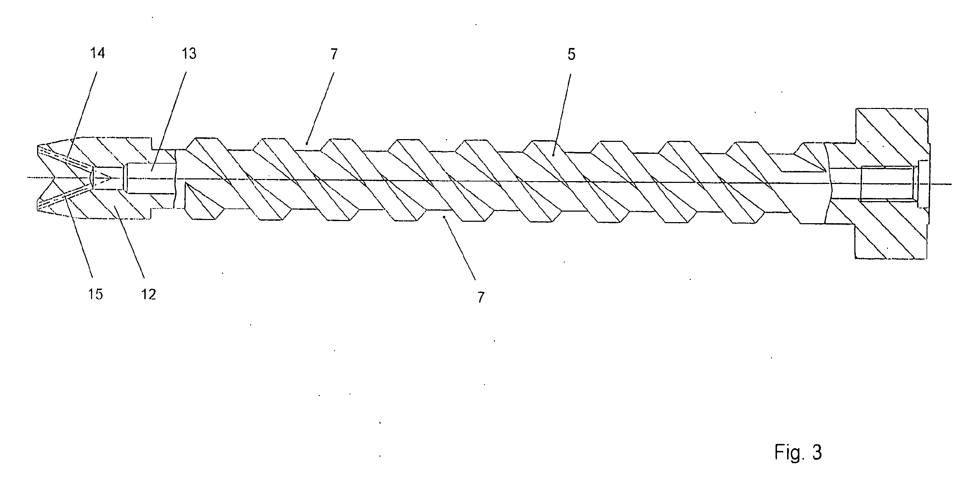

Bei der Darstellung nach Fig.3 ist ersichtlich, dass die Kühlkanäle 7 von einer doppelgängigen Kühlspirale gebildet sind, sodass eine effiziente Kühlung einer entsprechend stabilen und dickwandigen Einspritzdüse gewährleistet werden kann.

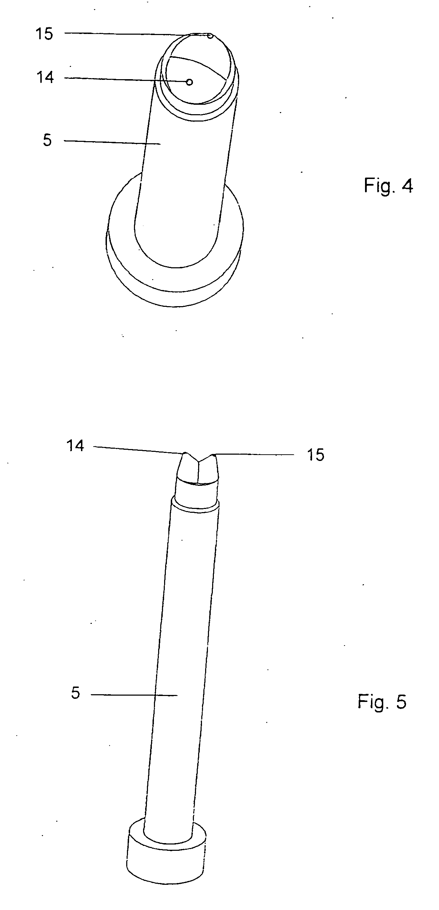

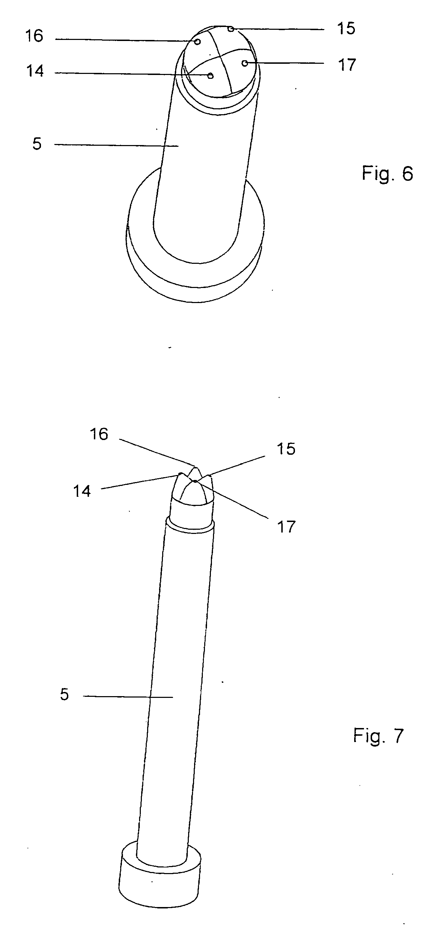

Aus der vergrößerten Darstellung nach Fig.3 ergibt sich aber nun ebenso wie bereits aus der Darstellung nach den Figuren 1 und 2, dass der Düsenkopf 12 der Kaltkanaldüsen ausgehend von einem zentralen Zuführungskanal 13 zwei spitzwinkelig anschließende Düsenkanäle 14 und 15 aufweist, über welche das einzuspritzende Material verteilt wird und in die in den Figuren 1 und 2 ersichtlichen Formnester 10 ausgepreßt wird. Die Anzahl der Düsenkanäle im Düsenkopf 12 kann beliebig gewählt werden. Insbesondere sind Ausbildungen mit zwei, drei, vier oder mehr Düsenkanälen möglich, wie dies schematisch in den Figuren 4 und 5 für eine Ausbildung mit zwei Düsenkanälen 14 und 15 und in den Figuren 6 und 7 für eine Ausbildung mit vier Düsenkanälen, welche nunmehr zusätzlich mit 16 und 17 bezeichnet sind, er-sichtlich ist.

## Patentansprüche

1. Spritzgußform für warmverfestigende oder vulkanisierbare elastomere Materialien mit einer Mehrzahl von Formnestern und gekühlten Einspritzdüsen, welche in mit Formnestern in offener Verbindung stehenden Vorkammern münden, **dadurch gekennzeichnet, dass** die Einspritzdüsen (5) als Mehrfachdüsen ausgebildet sind und über eine Mehrzahl von Düsenkanälen (14,15) und Düsenmündungen in eine gemeinsame Vorkammer (11) münden und dass eine Mehrzahl von Formnestern (10) über jeweils wenigstens einen Kanal mit der Vorkammer (11) in offener Verbindung steht.

2. Spritzgußform nach Anspruch 1, **dadurch gekennzeichnet, dass** die Kanäle zwischen Vorkammer (11) und Formnestern (10) jeweils im Bereich der Mündung eines Düsenkanals (14,15) der Einspritzdüsen (5) angeordnet ist.

3. Spritzgußform nach Anspruch 1 oder 2, **dadurch gekennzeichnet, dass** die Düsenkanäle (14,15) der Einspritzdüsen (5) mit dem axialen Zuführungskanal (13) der Einspritzdüsen (5) jeweils spitze Winkel einschließen.

4. Spritzgußform nach einem der Ansprüche 1 bis 3, **dadurch gekennzeichnet, dass** der Mehrfachdüsenkopf (12) in axialer Richtung zur Düsenspitze in einem mittleren, axialen Bereich kürzer ausgebildet ist als im Bereich der seitlich der Düsenachse liegenden Düsenmündungen.

5. Spritzgußform nach einem der Ansprüche 1 bis 4, **dadurch gekennzeichnet, dass** die Vorkammer (11) im Axialschnitt der Kontur des Düsenkopfes (12) entsprechend ausgebildet ist.

6. Spritzgußform nach einem der Ansprüche 1 bis 5, **dadurch gekennzeichnet, dass** der den Formnestern (10) benachbarte Grund der Vorkammer (11) als Ringkanal ausgebildet ist, in welchen die über den axialen Bereich des Düsenkopfes (12) vorragenden Düsenmündungen eintauchen.

## Claims

1. An injection mold for hot-curing or vulcanizable elastomers, including a plurality of mold cavities and cooled injection nozzles discharging into antechambers in open communication with mold cavities, **characterized in that** the injection nozzles (5) are configured as multiple nozzles discharging into a common antechamber (1) via a plurality of nozzle channels (14, 15) and nozzle mouths, and that a plurality of mold cavities (10) are in open communication with the antechamber (11) via at least one channel each.

2. An injection mold according to claim 1, **characterized in that** the channels between the antechamber (11) and the mold cavities (10) are each arranged in the region of the mouth of a nozzle channel (14, 15) of the injection nozzles (5).

3. An injection mold according to claim 1 or 2, **characterized in that** the nozzle channels (14, 15) of the injection nozzles (5) each enclose an acute angle with the axial supply channel (13) of the injection nozzles (5).

4. An injection mold according to any one of claims 1 to 3, **characterized in that** the multiple nozzle head (12), in the axial direction to the tip of the nozzle, is designed to be shorter in a central axial portion than in the region of the nozzle mouths located laterally of the nozzle axis.

5. An injection mold according to any one of claims 1 to 4, **characterized in that** the antechamber (11) in the axial section is designed to correspond with the contour of the nozzle head (12).

6. An injection mold according to any one of claims 1 to 5, **characterized in that** the antechamber base adjacent the mold cavities (10) is designed as an annular channel into which the nozzle mouths projecting beyond the axial region of the nozzle head (12) are immersed.

## Revendications

1. Moule d'injection pour des matériaux élastomères se solidifiant à chaud ou vulcanisables, comprenant une multiplicité de cavités de moulage et de buses d'injection refroidies, qui débouchent dans des préchambres placées en communication ouverte avec des cavités de moulage, **caractérisé en ce que** les buses d'injection (5) sont conçues sous forme de buses multiples et débouchent dans une préchambre (11) commune, au travers d'une multiplicité de canaux de buse (14, 15) et d'embouchures de buse, et **en ce qu'**une multiplicité de cavités de moulage (10) est placée en communication ouverte avec la préchambre (11), chacune au travers d'au moins un canal.

2. Moule d'injection selon la revendication 1, **caractérisé en ce que** les canaux entre la préchambre (11) et les cavités de moulage (10) sont disposés chacun dans la région de l'embouchure d'un canal de buse (14, 15) des buses d'injection (5).

3. Moule d'injection selon la revendication 1 ou 2, **caractérisé en ce que** les canaux de buse (14, 15) des buses d'injection (5) forment respectivement des angles aigus avec le canal d'alimentation axial (13) des buses d'injection (5).

4. Moule d'injection selon l'une des revendications 1 à 3, **caractérisé en ce que** la tête de buse multiple (12) est, en direction axiale vers la pointe de la buse, conçue plus courte dans une région axiale centrale que dans la région des embouchures de buse situées sur les côtés de l'axe de la buse.

5. Moule d'injection selon l'une des revendications 1 à 4, **caractérisé en ce que** la préchambre (11) est dotée d'une forme correspondant, en coupe axiale, au contour de la tête de buse (12).

6. Moule d'injection selon l'une des revendications 1 à 5, **caractérisé en ce que** le fond de la préchambre (11), voisin des cavités de moulage (10), est réalisé sous forme d'un canal annulaire, dans lequel pénètrent les embouchures de buse s'avançant au-delà de la région axiale de la tête de buse (12).
